# EUROPEAN PATENT APPLICATION

(11) **EP 0 893 637 A2**
(43) Date of publication of application: **27.01.1999**
(21) Application number: 98113893.6
(22) Date of filing: 24.07.1998
(51) Int. Cl.: F16L 3/02

(54) **Mounting apparatus for pipes and other articles and method of manufacturing the same**

(30) Priority: 24.07.1997 DE 19731946
(71) Applicant: ROBLON A/S, DK-9900 Frederikshavn (DK)
(72) Inventor: Olesen, John, 9900 Frederikshavn (DK)
(74) Representative: Morgan, James Garnet

(57) **Abstract**

A mounting apparatus (21) for pipes (18) and other articles, with the mounting apparatus (21) comprising a structure which extends at least partly around the pipe (18) or article and which has an anchoring means (23) is characterized in that the structure comprises a plurality of fused together bands (10) each comprising at least one string (12), and preferably a plurality of adjacently disposed strings (12), of load-carrying members consisting of filaments, with the bands (10) each having a thermoplastic coating (14), in particular a thermoplastic resin coating. A method of making such a structure and its uses are also described.

## Description

The present invention relates to a mounting apparatus for pipes and other articles, with the mounting apparatus comprising a structure which extends at least partly around the pipe or article and which has an anchoring means. Such mounting apparatuses are, for example, known in the form of cable clamps and serve for the mounting of a cable on a wall. Here the mounting apparatus does not have to bear any particular forces.

There are, however, other applications in which the mounting apparatuses have to bear considerable forces and in which special requirements exist with reference to corrosion protection.

A problem area of this kind is to be found in offshore oil and gas production. Here, pipes with diameters of the order of magnitude of ½ m have to be secured to drilling rigs, platforms, ships and foundations, including foundations which lie deep below the water surface.

The reliable attachment of such pipes to such supporting structures is problematic. It is frequently carried out by means of hoops of iron or steel, which either hold or carry the pipes in many different ways. With a design of this kind, a subsequent surface treatment of the pipes can, however, not include the regions where the pipe hoop contacts the pipe surface. This has the consequence that the pipes corrode sooner or later, a corrosion which is almost impossible to prevent. This corrosion is, on the one hand, accelerated by the moist environment and, on the other hand, by the different metals which are used.

There are, however, also a whole series of other applications where the reliable mounting of pipes represents a problem, for example in nuclear power stations, larger industrial plants, or on a smaller scale in jet engines.

US patent 3,668,740 discloses a high strength, non-corrodible strap of composite materials, which is in particular intended for anchoring underground storage tanks on foundations to prevent them lifting, due to buoyancy forces which arise when the tank is partly or fully empty and is partly or fully submerged in areas having a high water table.

The strip is manufactured by drawing structural members, such as glass filaments, through a pot containing a duroplastic resin, such as isophtalic polyester or another hardenable resin, such as bisphenol or epoxy resins. The resin impregnated filaments are then wound into a continuous or endless band. The number of revolutions required is determined by the desired strength of the finished strap. For example, a strap of 1 ¾ inches (44mm) width and ¼ inch (6.25mm) thickness can be wound with twenty revolutions of a bundle of glass filaments to provide a tensile strength of 20,000 pounds.

The length of the finished strap is determined by the distance between the axially directed winding fingers of a winding apparatus. The axially directed fingers are adjustable along radially directed arms of the winding apparatus to vary the size of the loop used to form the strap.

After the desired number of revolutions have been made, the winding apparatus is stopped and the advancing resin impregnated filaments are severed from the wound continuous band and the loose end is pressed into the uncured resin of the wound continuous band where it is integrated into the matrix. The wound continuous band, together with two thimbles for the eyes of the finished strap, are removed from the winding apparatus and placed on a mould table.

The two opposite sides of the wound continuous band are pressed together on the mould table to form an elongate strap with two eyes and the formed strap is left in the mould until the resin cures into a hard matrix. US patent 3,668,740 also specifies that the strap can also be produced by winding the filaments into the desired loop shape and then impregnating the assembled elements with resin to form the matrix of the strap construction. The impregnating resin can be applied by such methods as spraying, dipping, or injecting into a mould. In addition to these methods of producing a wound filament strap, a strap or other structural member can be produced with reinforcing filaments extending basically longitudinally and continuously from one end of the member to the other, but not looping. The resinous matrix can be applied either by advancing the bundle of filaments through a pot of resin or impregnating after the filaments have been placed into the desired configuration. It is to be noted that this invention is not limited to the use of filaments in the form of rovings, but also contemplates the use of strands, yarns, or woven filaments.

While glass filaments and polyester resin are the preferred constituents used for the straps of US patent 3,668,740, it is said there to be obvious to one skilled in the art that other materials can be readily substituted. The reinforcing material can be of any high tensile strength filaments of materials such as carbon, nylon, rayon, and metals. The matrix of the strap can be made from any abuse-resistant material such as epoxy resins, vinyl, and rubber, as long as it is compatible with the reinforcing filaments. The matrix material can be selected to give particular desired effects. For example, a soft, resilient material such as rubber could be used to form a matrix with the ability to firmly grip the object to be secured by the strap through the frictional advantages gained by compressing the matrix against the object. The advantages of such a strap would be useful in securing an object, such as a tank, against rotation when subjected to motion such as occurs aboard a ship. Other possible desired effects, such as extensibility, can be had by using the construction form of this invention with elastomeric matrix materials and reinforcing material having a high coefficient of expansion or extensibility created by twisting the filaments.

The constructions described in US patent 3,668,740 are, however, all very complicated and messy to realize and subject to significant restrictions. For example, if a winding apparatus is used, it has to be designed for a maximum circumferential length of the wound band and cannot be used for greater circumferential lengths. The curing of the thermoplastic resin presents problems not just in the finished article but also in the resin pot and resin impregnating apparatus. Moreover, there are considerable difficulties in handling the resin impregnated filaments, which severely restricts the products which can be made from them.

Reference should also be made to German patent application 195 22 014 A1, which discloses the use of flexible bands consisting of a high modulus grid fabric of polyester yarns which are coated with a protective layer of PVC and used to interconnect a plurality of pipelines extending parallel to one another by wrapping the band once around each pipeline in turn and anchoring the two free ends of the band in the earth by means of holders.

The object of the present invention is to provide a mounting apparatus which enables a reliable attachment of pipes and articles of the most diverse kind and also offers corrosion protection. Furthermore, it is an object of the invention to provide an extremely flexible method of providing a wide variety of different mounting apparatuses from a single starting material, which can itself be economically produced.

In order to satisfy this object a mounting apparatus of the initially named kind is provided and is characterized in that the structure comprises a plurality of fused together bands or band lengths each comprising at least one string, and preferably a plurality of adjacently disposed strings of load-carrying members consisting of filaments, with the bands each having a thermoplastic coating, in particular a thermoplastic resin coating.

The mounting apparatus is preferably characterized in that at least the side of the structure confronting the pipe or article is covered by a thermoplastic resin.

In particular the bands expediently comprise strings which each have the form of a twisted yarn, a rope or a cable.

Such bands are known per se. They are, for example, sold by the company Roblon A/S (P.O. Box 120, 9900 Frederikshavn, Denmark) under the designation "orbit straps". They consist, as a rule, of several strings or cables of aramide fibers, with a plurality of adjacently disposed strings being jointly covered with a thermoplastic polyurethane. These bands are used in the offshore oil production as strapping for buoyancy modules and have become increasingly used in deep waters (2000 to 7000 m water depth).

Thus, in accordance with the present invention, a plurality of bands or band lengths each having a thermoplastic coating are placed together, preferably in a shaped mould, and heated so that the thermoplastic coatings fuse together. The result is a structure which is of stable shape, but nevertheless has a flexible skin to provide sealing when in contact with a pipe or article when the structure is stressed, and in which the different layers each comprising one band, or a plurality of bands laid side by side, cooperate to provide the net strength of the apparatus. Moreover, the structure can itself be entirely flexible so that it can conform to the desired shape required in use. A preferred method of manufacturing a mounting apparatus in accordance with the invention is characterized in that a plurality of bands or band lengths, each having respective strings of load-carrying members consisting of filaments and with a thermoplastic resin covering, are introduced into a mould and are heated in the mould to a temperature which corresponds to the softening temperature of the thermoplastic resin and are pressed together in the mould, and in that the temperature of the so formed moulded part is cooled at least preferably to beneath the softening temperature and the part is subsequently removed from the mould.

It will be seen that the basic building block of the invention is thus a finished band comprising a plurality of parallel, load carrying members which are enclosed in and fully surrounded by a thermoplastic covering. Such a band can be made efficiently in very long lengths, essentially as an endless band.

A large variety of different structures can then be formed in any desired dimensions or strengths by placing lengths of band alongside one another and/or on top of one another, with it being possible to place band lengths in strategic positions to produce local stiffening or reinforcing, e.g. by increasing the number of band lengths in the lug portions of a bracket structure, or in regions where enhanced bending stiffness is required.

The handling of the band lengths is simple. They are present in a cold non-sticky form and are not heavy. They are flexible and can easily be laid up in a mould. Once the structure has been laid up an increase in temperature to the softening point of the resin and the application of pressure is sufficient to form a fully fused structure, without loss of positioning accuracy of the individual strings. The fused thermoplastic coatings coupled with the form locked, i.e. keyed bond of the thermoplastic resin to the surfaces of the strings, i.e. to the surface topology of the strings, which are preferably of twisted multi-ply yarns, rope or cable form, provides enormous shear areas and adequate load sharing between the bands and between the individual strings, as well as cohesion of the structure.

In a simplest form of the mounting apparatus of the kind of the invention, this can comprise simply one folded together band with just one string of a load-carrying member consisting of filaments. However, a plurality of bands or band lengths is preferably used, which each consist of a plurality of strings arranged alongside one another in one layer and each comprising load-carrying members consisting of filaments, optionally with spacers arranged between the strings, with the strings and spacers being secured to one another by means of the thermoplastic resin. The spacers can, for example, comprise strings of fibers or filaments having a lower strength in comparison to the filaments of the load-carrying members.

The full jacketing or encapsulation of the strings is preferred, because these are then protected from all sides.

When a mounting apparatus of this kind is used for the mounting of pipes and other articles, the relatively soft thermoplastic resin nestles closely against the pipe or other article to be secured, and indeed as a result of the mounting forces which are introduced via the anchoring device into the band. In this way a sealed connection is provided between the band and the corresponding surface of the pipe or of the article, which prevents corrosion at this point. Since the mounting apparatus does not consist of metal, the danger of an electrolytic corrosion process does not exist.

It is particularly favorable if the mounting apparatus consists of at least two bands arranged above one another, which are held together by the thermoplastic covering. A mounting apparatus with at least three bands arranged above one another is particularly preferred, with the band or bands which form the middle layer consisting partly or fully of fibers or filaments which have a low strength in comparison to the filaments of the load-carrying members. A mounting apparatus of this kind can be produced by laying lengths of a corresponding number of bands above one another in a mould, which, for example, has a U-shape, which is matched to the profile of the pipe to be secured. The mould is then heated to a temperature which corresponds to the softening temperature of the thermoplastic material that is used. The bands are simultaneously pressed together well by the exertion of pressure onto one or more mould parts. This leads to the thermoplastic coverings of the bands entering into an intimate connection with one another, a type of fusing, which, on the one hand, leads to a unitary component, on the other hand, however, also leads to a moulded part which has excellent mechanical characteristics.

Through the use of a plurality of bands, a type of sandwich structure is produced, which can have substantial stiffness. The load-carrying members in the inwardly and outwardly disposed bands can be regarded as the flanges of an I-beam, while the strings of the middle band or of the middle bands satisfy a connecting and spacing task between the two cords and hereby also make their contribution to the bending stiffness of the structure.

No corrosion can arise at positions where the thermoplastic surface of such moulded parts, preferably consisting of thermoplastic polyurethane, lies against the pipes. As an additional effect, vibrations and other shocks are simultaneously damped and partly fully eliminated before they reach the base offshore construction, which signifies a significant noise reduction.

The mounting apparatuses can be produced from different bands, which contain strings of different fibers, whereby they can be given different characteristics. In situations where high strength is required, one can use strong fibers such as, for example, aramide, gel-spun polyethylene, PBO fibers such as Zylon, carbon fibers, boron fibers and the like. In mounting systems where large compression resistances are required, the same fibers can be combined with compression resistant fibers, such as glass fibers, steel or the like. In sandwich constructions one can use relatively inexpensive fibers at the center, the most important function of which being to act as a spacer between the outer and inner elements. Such fibers can, for example, consists of polypropylene or polyester, and natural fibers can also be used.

In order to increase the compression stiffness of the middle band or of the middle bands, this or these can consist of a thermoplastic resin with a high proportion of fibers dispersed therein, i.e. the use of strings of fibers in the middle layer or in the middle layers of the construction is not essential, that is to say the finished structure can be made up of different types of bands if desired to obtain special properties. The individual bands should, however, all have a thermoplastic covering to enable them to be fused together.

Many different thermoplastic materials can be used as the covering material. In principle almost all thermoplastic resins can be considered, provided that they can be fused together in a controlled manner by their subsequent controlled heating.

Special variants of the article of the invention can be found from the subordinate claims.

The invention will be explained in the following in more detail with reference to embodiments and to the drawings, which show:
- Fig. 1: a perspective illustration of an "orbit strap" of the Roblon company known per se, such as can be used in the present invention,
- Fig. 2: a representation of the mounting of a steel pipe with metallic hoops, such as is known in the prior art,
- Fig. 3: a side view of a mounting apparatus in accordance with the invention in a mould for its manufacture,
- Fig. 4: a cross-section through the mounting apparatus of Fig. 3 in accordance with the section line IV-IV of Fig. 3,
- Fig. 5: a pipe mounting apparatus assembled from two mounting apparatuses in accordance with Fig. 3,
- Fig. 6: an alternative pipe mounting apparatus for the suspended attachment of a pipe to a carrying structure,
- Fig. 7: a mounting apparatus in accordance with the invention for a plurality of pipes arranged alongside one another on a foundation,
- Fig. 8: a representation of a mounting apparatus similar to that of Fig. 3, but in a variant with a special anchoring device,
- Fig. 9: an alternative mounting apparatus in accordance with the invention in the form of a U-shaped hoop with loops for the anchoring to a base structure or foundation, and
- Fig. 10: a sketch to illustrate the manufacture of a band structure for the present invention.

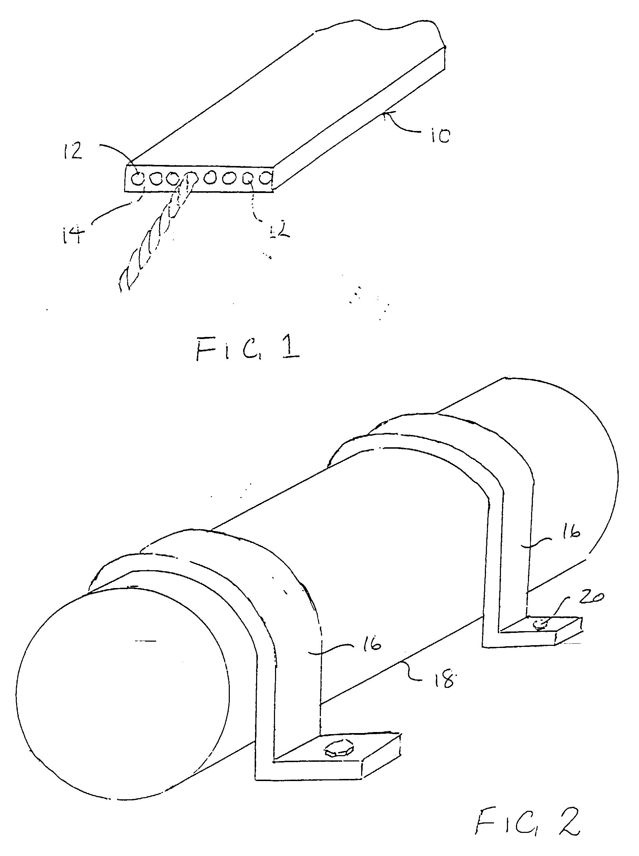

Fig. 1 shows, first of all, a section from a so-called orbit strap 10 of the Roblon company, which in this example consists of eight strings 12, which are arranged alongside one another and which each consist of load-carrying members consisting of aramide filaments, with the strings here in each case having the shape of a cable and being covered with a thermoplastic polyurethane 14, and indeed in such a way that the band 10 has a rectangular cross-section.

Fig. 2 shows a mounting apparatus for steel pipes in the offshore field, which is known per se and which has U-shaped steel hoops 16 which extend around the pipe 18 and are secured to the foundation by anchoring bolts 20. It is known from practice that corrosion arises to a larger degree between the steel hoops 16 and the pipe 18 in the region where the steel hoop surrounds the pipe.

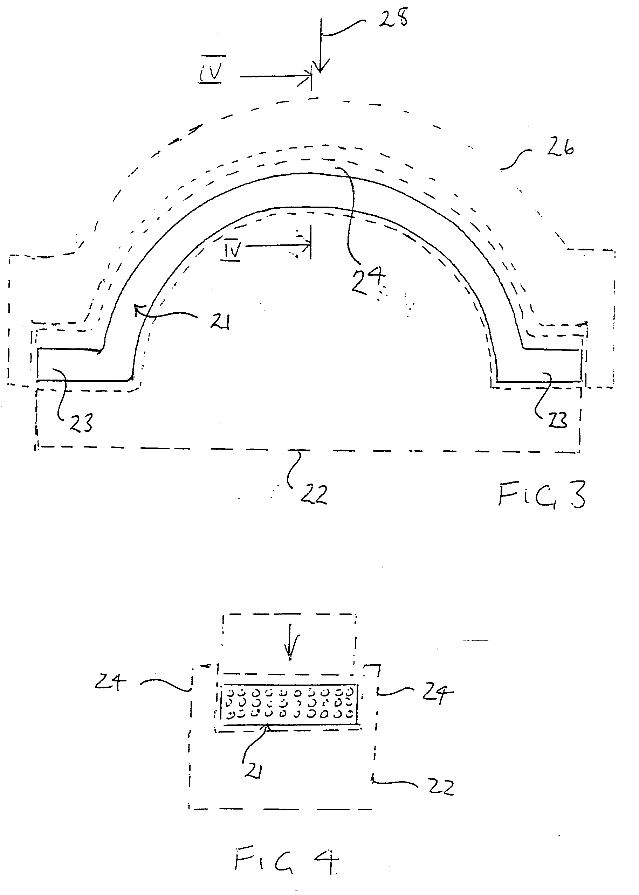

Fig. 3 then shows a first embodiment of a mounting apparatus 21 in accordance with the invention having approximately a C-shape with side lugs 23, 24. This mounting apparatus consists here of three bands in accordance with Fig. 1, which are laid above one another and are pressed into a constructional unit. This can, for example, take place in that the three bands are laid above one another over a mould part 22 (Fig. 3), which has side cheeks 24 to the left and right of the bands in order to ensure an aligned arrangement of the bands. Only the one side cheek behind the mounting apparatus can be seen in Fig. 3. The reference numeral 26 signifies a further mould part which is pressed downwardly in the direction of the arrow 28 in order to press together the three bands which are initially separate from one another. A heating device (not shown) ensures that the mould parts can be brought to a temperature at which a softening of the thermoplastic polyurethane covering of the belts occurs. Under the compression forces the jackets of the individual belts then unite into a structure, and indeed a structure having a shape which is predetermined by the parts 22, 26. After the cooling down of the parts 22, 26 or the mould part 21 to beneath the softening temperature, the mould part 21 can then be removed from the mould 22, 26. It then retains the shape which is evident for the part 21 in Fig. 3. Gas pressure can also be sufficient to ensure homogenous fusing of the bands. For example, by enclosing them in a mould with an inflatable bladder pressing against the bands.

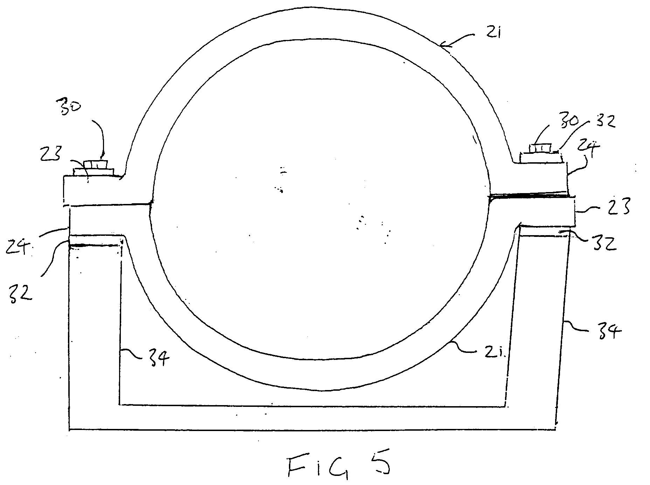

Fig. 4 shows how three bands, each consisting of a plurality of strings 12 of the load-carrying member, are surrounded by a unitary matrix of thermoplastic resin, i.e. the structure of the mounting apparatus 21 after its removal from the mould.

Fig. 5 shows how two mould parts 21 in accordance with Fig. 3 can be laid against one another in order to secure a pipe (not shown). The side lugs 23, 24 of the two mould parts 21, which represent a component of the anchoring device, are secured by means of bolts 30 and washers 32 to the posts 34 of a foundation 35. In this manner they secure the position of the pipe 20.

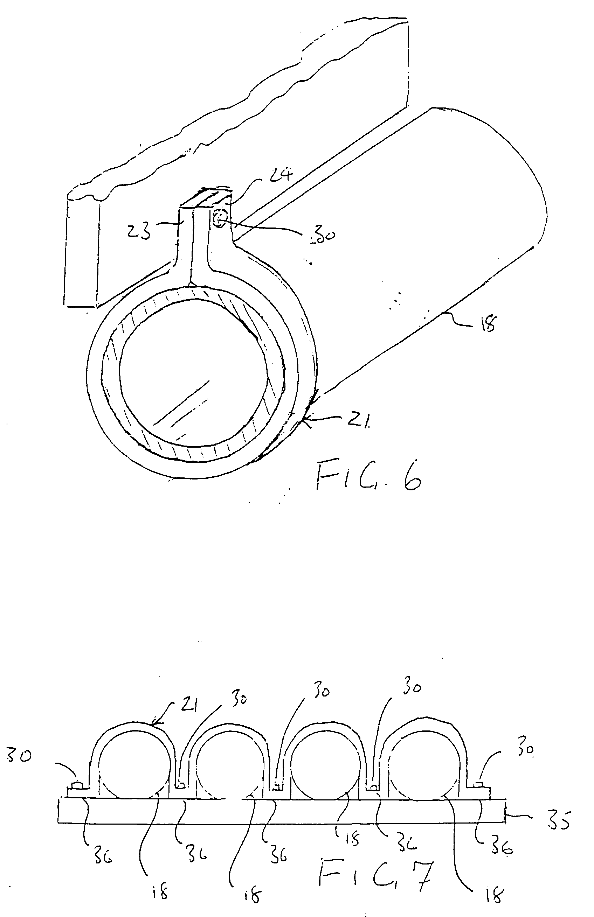

Fig. 6 shows an alternative shape of the mounting apparatus 21, in which a structure, which also consists of three bands arranged above one another here, are placed around a corresponding mandrel in a circular mould part 21, with the ends of the bands being bent radially outwardly away from the center of the circular part at one point in order to form lugs 23, 24, so that a pipe 18 can be suspended by the so formed mounting apparatus from the structure 35, and indeed by a mounting bolt 30, which extends through the lugs formed by the radially outwardly bent parts of the straps, optionally through the intermediary of a washer (not shown in Fig. 6).

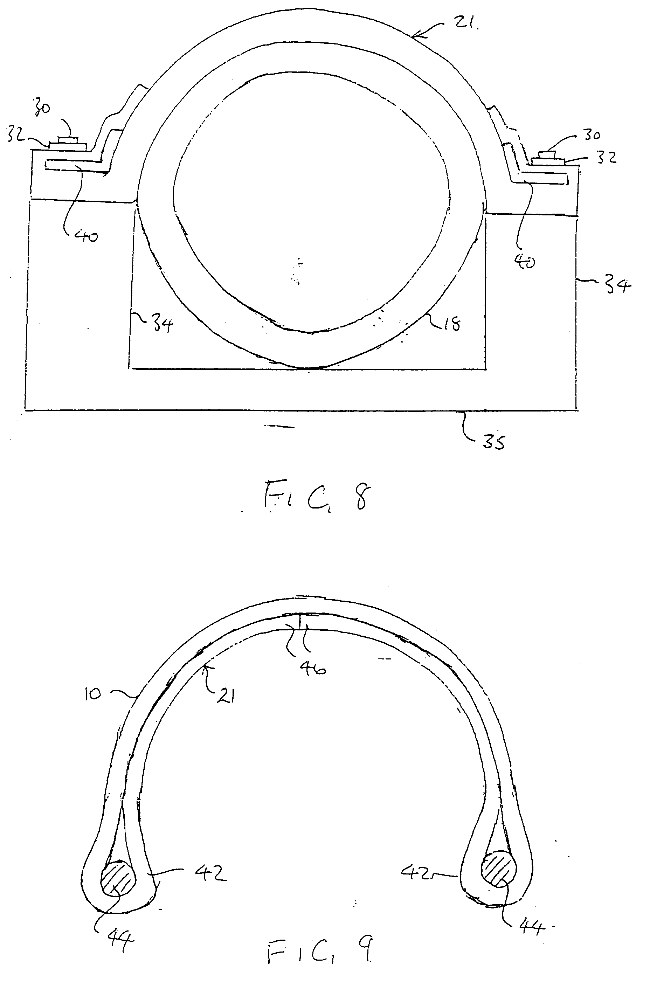

Fig. 7 shows that the mounting apparatus can also have the form of a plurality of U-shaped hoops 21, which are arranged alongside one another and merge into one another, and which can be secured at the points 36 to a foundation 35 by means of bolts and pressure-distributing washers (not shown) so that several pipes 18 - in the example four pipes - can be arranged alongside one another.

It is particularly favorable that a whole multiplicity of different mounting apparatuses in the form of moulded parts 21 can be manufactured starting from the existing spectrum of bands or straps by the cutting of corresponding lengths from a long band 10 as a starting material. In this manner a rational manufacture of the moulded parts 21 is possible, and the starting material 10 can likewise be rationally manufactured.

Fig. 8 shows a possibility of integrating a metal plate 40, for example a steel plate, into the mounting apparatus 21, so that this plate is at least substantially closed on all sides and can therefore not corrode, with the steel plate producing a stiffened region of the structure, which is expedient for the mounting to a corresponding foundation 35. In order to enclose the metal plate, the lower belt 10 is placed over the metal plate and secured to the band 10 at the upper side of the mounting apparatus.

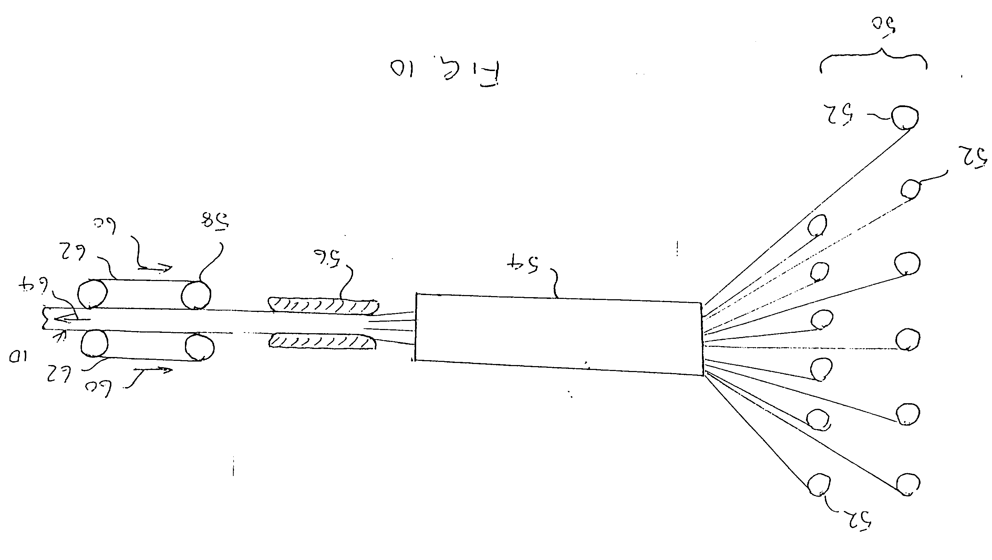

Fig. 9 shows an alternative type of anchoring in which the bands are formed into a loop-shape 42, which can then be secured, for example via a throughgoing bar 44 and bolt elements (not shown) to a foundation, and which thereby surround the pipe. The ends 46 of the bands are preferably arranged remote from the loops 42 in order to achieve the maximum strength of the loops. In these examples only mounting apparatuses for the attachment of pipes 18 are shown. However, no restriction to the mounting of pipes is intended, since the mounting apparatus can also be used for the mounting of differently designed articles, provided that corresponding moulds are produced in order to produce correspondingly shaped moulded parts from the bands.

Even complicated mould parts can be produced by laying different lengths of the bands on one another in order to realize the corresponding shape.

Since the thermoplastic covering becomes soft on heating, it is also possible to achieve a particular adaptation to the surface of the mould. For example, this could have a grooved surface with the mounting apparatus having a complementary grooved surface after its removal from the mould.

Even though in these embodiments three bands are placed together in order to achieve the finished structure of the mounting apparatus, more bands or fewer bands can naturally also be used in order to produce the mounting apparatus. For example, bands which form the middle layers of the finished structure can also be used, which consist of fiber materials which are less strong than the strings in the outer layers, and indeed without having to fear considerable penalties in the strength and bending strength of the finished mounting apparatus. It is also not necessary for all the strings or one band to consist of the same material. It is entirely possible to use different materials here in order to meet differing requirements. Thus, some of the strings can consist of a layer of favorably priced fibers, which normally have a lower strength. Such strings then, for example, satisfy the function of spacers rather than the function of load-carrying members.

Fig. 10 illustrates an apparatus for the manufacture of a band having twelve strips each in the form of a multi-ply yarn or corded yarn. The plied yarn can e.g. be a 2-ply, a 3-ply or a multi-ply yarn. The material can be glass, aramide, PBO, Vectran, or other high performance fibers. The yarns are first coated with a thermoplastic resin in a cross-head extruder (not shown) and wound onto large reels 52 of a creel 50. The thermoplastic resin used can be of any known type, as long as it can be processed in an extruder. The shape of the outside of the plied yarns mentioned above ensures a good mechanical cohesion between the yarns and the thermoplastic resin. In the example shown twelve coated yarns are used and are each wound onto a respective reel 52 of the creel 50. The coated yarns are drawn from the reels and led through a hot air oven 54, where the temperature is such that it corresponds to the softening temperature of the plastic. At the outgoing side of the oven 54, there is placed a die 56 which corresponds to the size and profile of the band 10 which is the result of the process. The die 56 has a size which ensures a good pressure in the material which is pulled through the die. A caterpillar pulling arrangement 58 (a caterpuller) is placed at an appropriate distance after the die. This arrangement comprises two recirculating belts or bands 62 which move in the directions shown by the arrows 60. The arrangement 58 pulls the whole band 10 and thereby the coated yarns through the process line. After the caterpuller 58 the band 10 can, e.g., be wound onto a drum for storage or can be processed immediately, while still warm, into a mounting structure of a mounting apparatus in accordance with the invention. By way of example, the twelve plied aramide yarns can each consist of 3340 x 1 x 3 dtex 110s-65z coated with polypropylene thermoplastic resin. The hot air oven can have a temperature of 220° C corresponding to the melting temperature of the polypropylene. The die 56 can have a rectangular aperture of 3mm x 21mm and the resulting band has a rectangular cross section of the same size.

When the bands 10 are processed into a structure, they are warmed up to a softening temperature which is less than the melting temperature. The application of a sufficiently high pressure then results in fusion of the thermoplastic coverings to one another . The fused coverings are essentially indistinguishable from a block of the thermoplastic material. Since melting does not take place, the strings remain substantially in the same positions in the structure as they had in the individual bands or band lengths. This applies to all variants of the invention, not just to the example given above. The pressures and softening temperatures have to be selected in accordance with the specified materials used.

## Claims

1. Mounting apparatus for pipes and other articles, with the mounting apparatus comprising a structure which extends at least partly around the pipe or article and which has an anchoring means, characterized in that the structure comprises a plurality of fused together bands each comprising at least one string, and preferably a plurality of adjacently disposed strings, of load-carrying members consisting of filaments, with the bands each having a thermoplastic coating, in particular a thermoplastic resin coating, whereby at least the side of the structure confronting the pipe or article and is preferably covered in a thermoplastic resin.

2. Mounting apparatus in accordance with claim 1, characterized in that each said string has the form of a twisted yarn, a rope or a cable.

3. Mounting apparatus in accordance with claim 1 or claim 2, characterized in that each band comprises spacers arranged between the strings of load-carrying members, which are secured to one another by means of the thermoplastic resin, with the spacers, for example, consisting of strings of fibers or filaments, with lower strength in comparison to the filaments of the load-carrying members.

4. Mounting apparatus in accordance with any one of the preceding claims, characterized in that it consists of at least two bands arranged above one another, which are held together by the fused thermoplastic coverings of the individual bands.

5. Mounting apparatus in accordance with any one of the preceding claims, comprising at least inner and outer bands with a central layer disposed therebetween, where the central layer itself comprises one or more bands, with the band or bands which form the central layer or central layers consisting partly or fully of fibers or filaments having a lower strength in comparison to the filaments of the load-carrying members.

6. Mounting apparatus in accordance with any one of the preceding claims, characterized in that the load-carrying members consist of filaments belonging to the group comprising aramide fibers, gel-spun polyethylene fibers, PBO fibers such as Zylon, carbon fibers, boron fibers, glass fibers or steel fibers and in that at least some of any spacers that may be present consist of strings which comprise polypropylene, polyester, natural fibers or the like, and in that the fibers or filaments having a lower strength in comparison to the filaments of the load-carrying members comprise polypropylene, polyester, natural fibers or the like.

7. Mounting apparatus in accordance with any one of the preceding claims, characterized in that the thermoplastic resin is a resin which can be fused together by controlled heating of a plurality of layers arranged above one another, for example a thermoplastic polyurethane or polypropylene.

8. Mounting apparatus in accordance with any one of the preceding claims, characterized in that each band comprises a so-called "orbit strap" as manufactured by the company Roblon A/S, P.O. Box 120, 9900 Frederikshavn, Denmark.

9. Mounting apparatus in accordance with any one of the preceding claims, characterized in that the structure comprising a plurality of bands laid above one another is a shaped part, which is moulded to the shape of the article or pipe to be secured.

10. Mounting apparatus in accordance with any one of the preceding claims, characterized in that a reinforcing element or a plurality of reinforcing elements is integrated into the structure of the mounting apparatus for the or each anchoring device, the reinforcing element being, for example, a metal plate which is, for example, arranged in a turnover of the band or of the bands and is at least substantially encapsulated by the thermoplastic resin, with optionally one or more bores being located in the metal plate to receive one or more mounting bolts, or the reinforcing element being formed by load-carrying members consisting of filaments, for example of further strings which can optionally be laid transverse to the strings of the band or of the bands.

11. Mounting apparatus in accordance with any one of the preceding claims, characterized in that the bands or band lengths arranged above one another is or are formed into a loop at at least one end, with the loop representing at least a part of the anchoring device.

12. Mounting apparatus in accordance with any one of the preceding claims, characterized in that it has essentially the form of a U-shaped hoop or the shape of a plurality of U-shaped hoops arranged adjacent to one another, either sideways or in a row.

13. Method for the manufacture of a mounting apparatus in accordance with one or more of the preceding claims, characterized in that a plurality of bands or band lengths, each having respective strings of load-carrying members consisting of filaments and with a thermoplastic resin covering, are introduced into a mould and are heated in the mould to a temperature which corresponds to the softening temperature of the thermoplastic resin and are pressed together in the mould, and in that the temperature of the so formed moulded part is cooled at least preferably to beneath the softening temperature and the moulded part is subsequently removed from the mould.

14. Use of a mounting apparatus in accordance with any one of the preceding claims as mounting clamps for the mounting of pipes to foundations, such as the mounting of pipes and pipe systems in the offshore area to drilling rigs, ships' decks and foundations, including foundations present on the bed of the sea.
